# EUROPÄISCHE PATENTSCHRIFT

(11) **EP 3 133 300 B1**
(45) Veröffentlichungstag und Bekanntmachung des Hinweises auf die Patenterteilung: **06.07.2022**
(21) Anmeldenummer: 16002115.0
(22) Anmeldetag: 05.05.2010
(51) Int. Cl.: F16B 7/20

(54) **BESCHICHTUNGSMITTELVORRICHTUNG UND BESCHICHTUNGSVORRICHTUNG**
COATING AGENT DEVICE AND COATING VALVE
DISPOSITIF DE REVETEMENT ET SOUPAPE DE REVETEMENT

(30) Priorität: 06.05.2009 DE 102009020077
(43) Veröffentlichungstag der Anmeldung: 22.02.2017
(62) Teilanmeldung aus: 10720270.7
(73) Patentinhaber: Dürr Systems AG, 74321 Bietigheim-Bissingen (DE)
(72) Erfinder: Herre, Frank, 71739 Oberriexingen (DE); Hering, Joachim, 88525 Dürmentingen (DE); Melcher, Rainer, 71720 Oberstenfeld (DE); Buck, Thomas, 74343 Sachsenheim (DE); Baumann, Michael, 74223 Flein (DE); Seiz, Bernhard, 74348 Lauffen (DE); Michelfelder, Manfred, 71711 Höpfigheim/Steinheim (DE)
(74) Vertreter: v. Bezold & Partner Patentanwälte - PartG mbB

(56) Entgegenhaltungen:
- EP-A2- 1 308 217
- WO-A1-99/46057
- WO-A2-2008/060935
- DE-A1- 19 516 697
- DE-A1- 19 914 343
- US-A- 2 296 079
- US-A- 3 201 048
- US-A1- 2008 110 939

## Beschreibung

Die vorliegende Erfindung betrifft das Gebiet der Beschichtung von Werkstücken, insbesondere von Karosseriebauteilen.

Zur Beschichtung von Werkstücken werden üblicherweise Beschichtungsvorrichtungen, beispielsweise elektrostatische Rotationszerstäuber oder Farbwechsler, eingesetzt, welchen das zu applizierende Beschichtungsmittel beispielsweise mittels eines Ventils, beispielsweise eines Beschichtungsmittelventils, zugeführt wird. Zum allgemeinen Stand der Technik kann zunächst auf die US 2 296 079 A, die WO 99/46057 A1 und die US 2008/110939 A1 verwiesen werden. US 3 201 048 A offenbart einen Zerstäuber mit z. B. mehreren Ventilen mit jeweils einer Ventilnadel.

Die Ventile in der Lackiertechnik sind üblicherweise mit einem runden Pneumatikkolben aufgebaut, wobei der pneumatische Antrieb des Ventils über einen Steuerluftraum, über eine Kolbendichtung und über eine Feder erfolgen kann, welche sich in einem runden Gehäuse befinden. In dem runden Gehäuse ist üblicherweise ein Zylinder ausgebildet, in welchem eine bewegbare Ventilnadel angeordnet ist. Im Betrieb werden die Ventilnadeln daher dem jeweils applizierten Beschichtungsmittel ausgesetzt und müssen, beispielsweise durch Kurzspülen mit Luft, gereinigt werden. Aufgrund der Anordnung der Ventilnadeln in Beschichtungsmittelzylindern ist eine derartige Reinigung jedoch konstruktionsbedingt schwierig. Die Beschichtungsmittelventile werden zudem ausgabeseitig in die Beschichtungsmittelvorrichtungen eingeschraubt, sodass sie zwecks Reinigung oder Wartung nur mit einem erhöhten Aufwand abgeschraubt werden müssen. Derartige Gewindeverbindungen lassen ferner auch keine dichtere Anordnung der Beschichtungsmittelventile in einer Beschichtungsmittelvorrichtung zu, was die Systemeffizienz reduziert. Die bekannten Beschichtungssysteme mit derartigen Beschichtungsmittelventilen und Beschichtungsmittelvorrichtungen sind daher wartungsintensiv und nicht effizient.

Bekannte Ventile sind ferner aus einem bzw. aus zwei Werkstoffen, üblicherweise Edelstahl und Kunststoff, aufgebaut. Die Verbindung dieser Werkstoffpaarungen erfolgt üblicherweise über Verschraubungen, Verklebungen, Anspritzungen quer zur Symmetrieachse der Ventilnadel. Im Betrieb sorgen diese Werkstoffpaarungen für Abreibungen, welche eine erhöhte Wartungsfrequenz nach sich ziehen.

Ferner ist zum Stand der Technik hinzuweisen auf EP 1 157 747 A2.

Es ist die Aufgabe der Erfindung, ein effizienteres sowie wartungs- und reinigungsfreundlicheres Beschichtungssystemkonzept zu schaffen. Diese Aufgabe wird durch die Merkmale des unabhängigen Anspruchs gelöst. Vorteilhafte Weiterbildungen der Erfindung sind Gegenstand der abhängigen Ansprüche. Die Erfindung betrifft insbesondere einen Gegenstand wie in den Ansprüchen definiert.

Die Erfindung basiert auf der Erkenntnis, dass eine Packungsdichte der Beschichtungsmittelvorrichtungen wie beispielsweise Beschichtungsventile in einer Beschichtungsvorrichtung der vorgenannten Art dadurch erhöht werden kann, dass eine rückseitige Antriebsschnittstelle sowie ein Gehäuse eines Beschichtungsmittelventils nicht kreisrund, sondern länglich ausgeführt sind, und beispielsweise formschlüssige geometrische Formen aufweisen, so dass mehrere Beschichtungsmittelvorrichtungen näher aneinander, beispielsweise formschlüssig in einer Beschichtungsmittelvorrichtung wie beispielsweise einem Farbwechsler, angeordnet werden können.

Die Erfindung betrifft einen Zerstäuber oder Farbwechsler, mit einer Antriebsschnittstelle zum Ankoppeln einer Antriebsvorrichtung, insbesondere eines pneumatischen Ventilantriebs, an die Beschichtungsmittelvorrichtung, welche ein Beschichtungsventil ist und einen länglichen Querschnitt aufweist, wodurch eine Packungsdichte von gleichartigen Beschichtungsmittelvorrichtungen durch eine raumsparende Nebeneinanderanordnung derselben erhöht werden kann.

Gemäß einer Ausführungsform ist der Querschnitt der Antriebsschnittstelle, d.h. der Verbindungsquerschnitt derselben, vollständig oder zumindest abschnittsweise oval und beispielsweise geformt, eine Mehrzahl von gleichartigen Beschichtungsmittelvorrichtungen zumindest teilweise formschlüssig nebeneinander anzuordnen. Hierzu kann die Antriebsschnittstelle beispielsweise formschlüssige Elemente, wie beispielsweise konvexe oder konkave Bereiche, aufweisen, die bei einer Nebeneinanderanordnung von gleichartigen Beschichtungsmittelvorrichtungen ineinander eingeführt werden können, wodurch die Packungsdichte der Beschichtungsmittelvorrichtungen erhöht werden kann.

Gemäß einer Ausführungsform umfasst die Antriebsschnittstelle zumindest zwei konvexe Befestigungsbereiche, welche diagonal gespiegelt angeordnet sein können, zur mechanischen Halterung der Beschichtungsmittelvorrichtung unter Verwendung von beispielsweise einer Schraubverbindung. Dadurch wird in vorteilhafter Weise eine axiale Sicherung der Beschichtungsmittelvorrichtung, welche beispielsweise steckbar sein kann, realisiert.

Gemäß einer Ausführungsform umfasst die Antriebsschnittstelle zumindest einen Steuereingang zur Aufnahme eines Antriebssignals der Antriebsvorrichtung, beispielsweise eines Luftdrucksignals, zum Antreiben einer Ventilnadel der Beschichtungsmittelvorrichtung.

Gemäß einer Ausführungsform nimmt ein Querschnitt eines der Antriebsschnittstelle nachgeordneten Gehäuses der Beschichtungsmittelvorrichtung zumindest teilweise den Querschnitt der Antriebsschnittstelle auf. Somit entspricht eine Kontur des Gehäuses der Beschichtungsmittelvorrichtung vollständig oder zumindest teilweise einer Kontur der Antriebsschnittstelle, wodurch eine effiziente Anordnung einer Mehrzahl von gleichartigen Beschichtungsmittelvorrichtungen ermöglicht wird.

Die Erfindung umfaßt ein Beschichtungsmittelventil mit einer Mehrzahl von nach außen geführten Ventilnadeln. Die Ventilnadeln dichten Ventilsitze des Zerstäubers oder Farbwechslers, mit welchem die Beschichtungsmittelvorrichtung gekoppelt ist, ab, wodurch eine Beschichtungseffizienz gesteigert werden kann.

Gemäß einer Ausführungsform weisen zumindest zwei Ventilnadeln der Mehrzahl der Ventilnadeln eine unterschiedliche geometrische Form auf, beispielsweise eine unterschiedliche Länge und/oder eine unterschiedliche Dicke, so dass unterschiedliche Ventilnadeln für unterschiedliche Zwecke eingesetzt werden können.

Erfindungsgemäß sind zumindest zwei Ventilnadeln der Mehrzahl der Ventilnadeln unabhängig voneinander betreibbar, wodurch eine hohe Betriebsflexibilität erreicht werden kann.

Gemäß einer Ausführungsform sind mehrere Steuergänge zur getrennten Ansteuerung von unterschiedlichen Ventilnadeln beispielsweise mittels Luftdruck vorgesehen. Ferner kann ein Steuereingang für mehrere Ventilnadeln vorgesehen sein. Dadurch wird eine einfache und effiziente Ansteuerung der Ventilnadeln ermöglicht.

Gemäß einer Ausführungsform sind die Ventilnadeln parallel angeordnet, so dass eine Mehrzahl von gegenüberliegenden, parallel angeordneten Ventilsitzen abgedichtet werden kann.

Gemäß einer Ausführungsform ist eine erste Ventilnadel der Mehrzahl der Ventilnadeln für das Kurzspülen mit einem Spülmittel, beispielsweise mit einem Verdünnungsmittel oder Lösemittel, vorgesehen. Eine zweite Ventilnadel kann für das Kurzspülen mit Luft vorgesehen sein. Darüber hinaus können eine erste Ventilnadel zur Ausgabe eines Beschichtungsmittels, beispielsweise eines Farblacks, und eine zweite Ventilnadel zur Rückführung des Beschichtungsmittels vorgesehen sein, wodurch eine hohe Flexibilität der Beschichtungsmittelvorrichtung erreicht werden kann. Das gleiche ist sinngemäß möglich für einen Härter und ein entsprechendes Härterventil.

Zum Verständnis der Erfindung werden verschiedene Gegenstände Bezug nehmend auf die beiliegenden Zeichnungen erläutert. Keine der Figuren zeigt alle Merkmale der Erfindung.
Fig. 1 zeigt eine Beschichtungsmittelvorrichtung;
Fig. 2 zeigt ein Gehäuse einer Beschichtungsmittelvorrichtung;
Fig. 3 zeigt einen Federring;
Fig. 4 zeigt die Beschichtungsmittelvorrichtung im eingebauten Zustand;
Fig. 5 zeigt eine Beschichtungsmittelvorrichtung;
Fig. 6 zeigt ein Gehäuse einer Beschichtungsmittelvorrichtung;
Fig. 7 zeigt die Beschichtungsmittelvorrichtung aus Fig. 5 im eingebauten Zustand;
Figuren 8A und 8B zeigen eine Draufsicht auf eine Aufnahmebuchse;
Fig. 9 zeigt eine Beschichtungsmittelvorrichtung;
Fig. 10 zeigt ein Gehäuse einer Beschichtungsvorrichtung;
Fig. 11 zeigt die Beschichtungsmittelvorrichtung aus Fig. 9 in eingebautem Zustand;
Fig. 12 zeigt eine Beschichtungsmittelvorrichtung;
Fig. 13 zeigt ein Gehäuse einer Beschichtungsvorrichtung;
Fig. 14 zeigt die Beschichtungsmittelvorrichtung aus Fig. 12 im eingebauten Zustand;
Fig. 15 zeigt eine Beschichtungsmittelvorrichtung;
Fig. 16 zeigt ein Gehäuse einer Beschichtungsvorrichtung;
Figuren 17A bis 17D verdeutlichen eine Befestigung eines Befestigungssockels in einer;
Fig. 18 zeigt eine Beschichtungsmittelvorrichtung;
Fig. 19 zeigt eine Aufnahmebuchse;
Figuren 19A, 19B und 19C verdeutlichen eine Verdrehsicherung;
Fig. 20a zeigt eine Beschichtungsmittelvorrichtung;
Fig. 20B zeigt eine Aufnahmebuchse;
Figuren 20C bis 20E verdeutlichen eine Verdrehsicherung;
Fig. 21 zeigt eine Beschichtungsmittelvorrichtung;
Fig. 22 zeigt eine Beschichtungsmittelvorrichtung;
Fig. 23 zeigt eine Antriebsschnittstelle;
Fig. 24 zeigt einen Querschnitt eines Gehäuses;
Fig. 25 zeigt eine Ventilnadel mit einem Kolbenelement;
Fig. 26 zeigt eine Draufsicht auf eine Anordnung einer Mehrzahl von Beschichtungsmittelvorrichtungen;
Fig. 27 zeigt eine seitliche Ansicht einer Anordnung einer Mehrzahl von Beschichtungsmittelvorrichtungen;
Fig. 28 zeigt eine Beschichtungsmittelvorrichtung gemäß einem Ausführungsbeispiel der Erfindung;
Fig. 29 zeigt eine Vorderansicht der Beschichtungsmittelvorrichtung aus Fig. 28;
Fig. 30 zeigt die Beschichtungsmittelvorrichtung aus Fig. 28;
Figuren 31A bis 31D zeigen Ansichten eines ovalen Kolbenelementes;
Figuren 32A bis 32D zeigen Ansichten einer ovalen Dichtung;
Fig. 33 zeigt eine Ventilnadel;
Figuren 34A und 34B zeigen Ventilnadeln;
Fig. 35 zeigt eine Ventilnadel;
Fig. 36 zeigt eine Ventilnadel; und
Fig. 37 zeigt eine Ventilnadel.

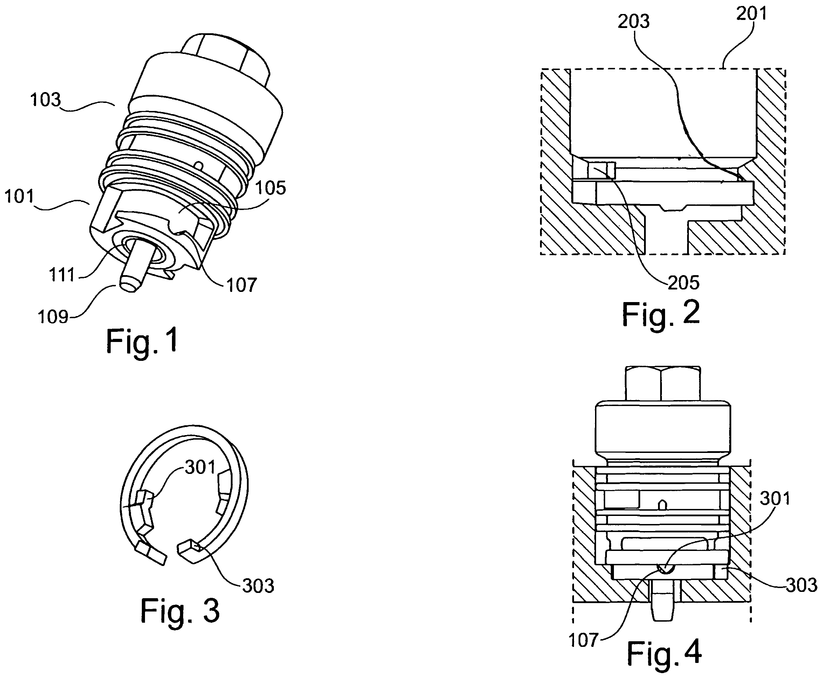

Fig. 1 zeigt eine Beschichtungsmittelvorrichtung, welche ein Ventil sein kann und zur Beeinflussung einer Ausgabe eines Beschichtungsmittels vorgesehen ist. Die Beschichtungsmittelvorrichtung umfasst einen steckbaren Befestigungssockel 101 zur steckbaren Halterung der Beschichtungsmittelvorrichtung. Der steckbare Befestigungssockel 101 ist beispielsweise mit einem Gehäuse 103 der Beschichtungsmittelvorrichtung verbunden.

Der steckbare Befestigungssockel ist mit einer Wendelnut 105 versehen, welche eine optionale Fixiernut 107 zur Aufnahme einer Fixiernase aufweist. Die Beschichtungsmittelvorrichtung umfasst ferner ausgangsseitig eine Ventilnadel 109, welche von dem steckbaren Befestigungssockel 101 zumindest teilweise umgeben ist, wobei eine Stirnseite des Befestigungssockels 101 mit einer Nut 111 für einen Dichtungsring versehen sein kann.

Fig. 2 zeigt ein Gehäuse einer korrespondierenden Beschichtungsmittelvorrichtung, das eine Aufnahmebuchse 201 zur Aufnahme des steckbaren Befestigungssockels 101 der Beschichtungsvorrichtung aus Fig. 1 vorgesehen ist. In der Aufnahmebuchse 201 ist deshalb eine Nut 203 gebildet, welche einen Federring 205 aufweisen kann. Der Federring 205 ist zur Aufnahme der in Fig. 1 dargestellten Wendelnut 105 vorgesehen.

Fig. 3 zeigt einen Federring, der ein elastisches Element ist und beispielsweise zumindest abschnittsweise kreisförmig gebogen ist und dem Federring 205 entsprechen kann. Der Federring umfasst auf seiner Innenseite zumindest eine oder zwei fehlende Fixiernasen 301, welche in die Fixiernut 107 aus Fig. 1 eingreifen, sowie eine Verdrehsicherung mit einem Montage- bzw. Haltezapfen 303.

In Fig. 4 ist eine Verbindung der Beschichtungsmittelvorrichtung aus Fig. 1 mit der Beschichtungsvorrichtung aus Fig. 2 dargestellt. Wie in Fig. 4 gezeigt, greifen die federnden Fixiernasen 301 des Federrings 205 in die Fixiernuten 107 ein.

Die in Fig. 1 dargestellte Beschichtungsmittelvorrichtung kann eine oder zwei Wendelnuten 107 aufweisen. Der Federring 205 mit den Haltezapfen 303 und den integrierten Fixiernasen 301 wird in die Nut 203 in der Aufnahmebuchse aus Fig. 2 eingesetzt, wobei die Haltezapfen 303 beim Einbau in die Wendelnut eingreifen. Hierbei wird der steckbare Befestigungssockel 101 in die Buchse 201 eingeführt und um beispielsweise 65° zwecks Verdrehsicherung verdreht. Zum Ausbau der Beschichtungsmittelvorrichtung wird diese zurückgedreht und herausgezogen. Dadurch ist es möglich, direkte Befestigungselemente zu verwenden. Ferner können große Auflageflächen zwischen dem Federring 205 und dem Gehäuse realisiert werden. Der Federring 205 kann ferner einfach ausgetauscht werden. Darüber hinaus ist eine Kontur des in Fig. 2 dargestellten Gehäuses der Beschichtungsvorrichtung einfach.

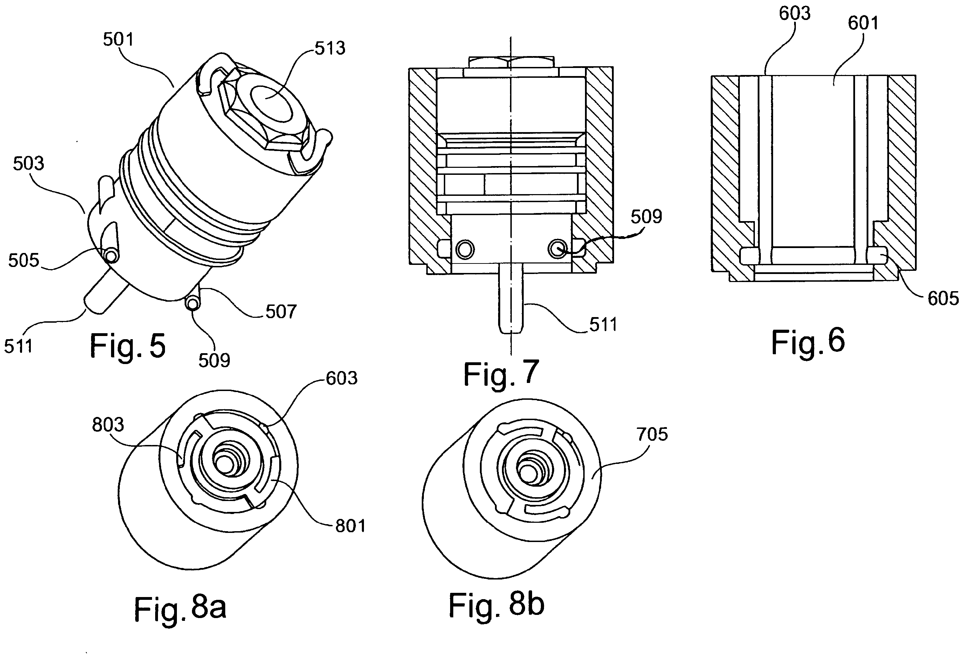

Fig. 5 zeigt eine Beschichtungsmittelvorrichtung, beispielsweise ein Beschichtungsmittelventil, mit einem Gehäuse 501 und einem steckbaren Befestigungssockel 503. In dem steckbaren Befestigungssockel 503, beispielsweise in einem Ventilsockel, sind zwei Haltestifte 505 und 507 quer in einer Querschnittsebene des Befestigungssockels eingebettet. Die Haltestifte 505 und 507 weisen nach außen geführte Enden 509 auf, durch welche Halteelemente gebildet werden. Die Beschichtungsmittelvorrichtung umfasst ferner eine Ventilnadel 511, welche ausgabeseitig angeordnet ist. Eingangsseitig ist ein Steuereingang 513 zum Ansteuern der Ventilnadel 511 mit beispielsweise Druckluft vorgesehen.

Fig. 6 zeigt ein Gehäuse einer Beschichtungsmittelvorrichtung, beispielsweise eines Luftzerstäubers oder eines Farbduplexers, mit einer Aufnahmebuchse 601 zur Aufnahme des steckbaren Befestigungssockels 503 aus Fig. 5. Die Aufnahmebuchse 601 umfasst axiale Ausnehmungen 603, in welchen die Halteelemente 509 geführt werden können. Ferner ist eine beispielsweise umlaufende Ausnehmung 605 zur Verdrehsicherung vorgesehen.

Fig. 7 zeigt die Beschichtungsmittelvorrichtung aus Fig. 5 im eingebauten Zustand.

Figuren 8A und 8B zeigen eine Draufsicht auf die Aufnahmebuchse 601 mit den axialen Ausnehmungen 603, welche beispielsweise durch axiale Nuten gebildet sein können. In der Aufnahmebuchse ist ferner ein Federring 801 mit abgewinkelten Armen, welche mit Haltewülsten 803 versehen sind, angeordnet. Die Haltewülste 803 rasten zur Verdrehsicherung in die axiale Ausnehmung 603 ein, wie es in Fig. 8B dargestellt ist. Zum Einbau der Beschichtungsmittelvorrichtung aus Fig. 5 wird deren Befestigungssockel 503 in die Aufnahmebuchse 601 eingesteckt und beispielsweise um 90° verdreht, bis die Verdrehsicherung einrastet. Diese rastet bei Zurückdrehen der Beschichtungsmittelvorrichtung automatisch aus, so dass die Beschichtungsmittelvorrichtung nach einer 90°-Drehung wieder herausgezogen werden kann. Vorteilhaft ist dabei ferner die Möglichkeit einer optischen Kontrolle der Ventillage durch das Einrasten der Verdrehsicherung.

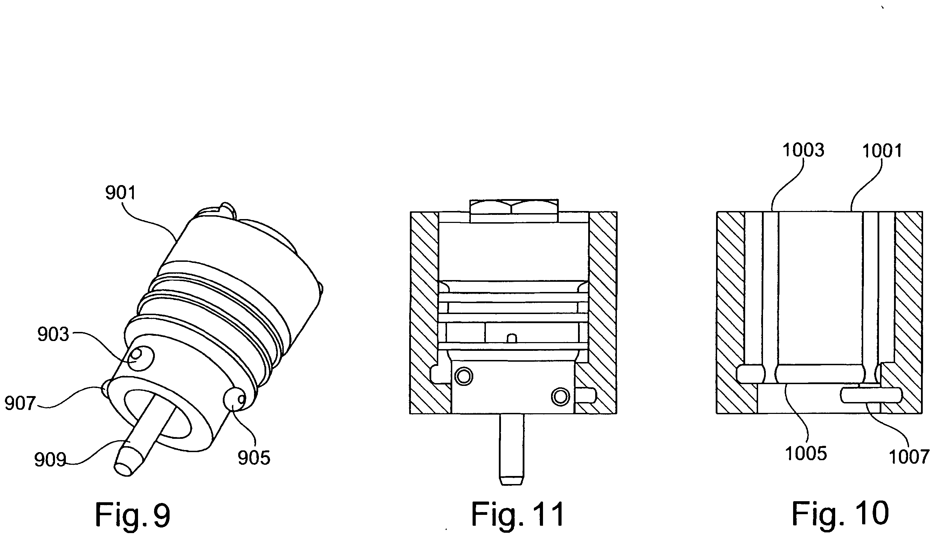

Fig. 9 zeigt eine Beschichtungsmittelvorrichtung mit einem Gehäuse 901 und einem steckbaren Befestigungssockel 903, in welchem in unterschiedlichen Querschnittsebenen zwei Haltestifte 905 und 907, welche beispielsweise als Normstifte ausgeführt sind, angeordnet sind. Die Beschichtungsmittelvorrichtung umfasst ferner ausgabeseitig eine Ventilnadel 909.

Die Haltestifte 905 und 907 weisen Endabschnitte auf, welche als Halteelemente nach außen geführt sind.

Fig. 10 zeigt ein Gehäuse einer Beschichtungsvorrichtung mit einer Aufnahmebuchse 1001, in welcher vier axiale Ausnehmungen 1003, beispielsweise axiale Nuten, angeordnet sind. Ferner sind zwei umlaufende Nuten 1005 und 1007 mit beispielsweise einem radialen Anschlag bei einem Winkel von etwa 270° eingefräst.

Fig. 11 zeigt die Beschichtungsmittelvorrichtung aus Fig. 9 in eingebautem Zustand. Hierzu wird der steckbare Befestigungssockel 903 in die Buchse 1001 eingeführt und beispielsweise um 90° bis zum Anschlag verdreht, wodurch die Verdrehsicherung einrastet. Zum Ausbau der Beschichtungsmittelvorrichtung rastet die Verdrehsicherung beim Zurückdrehen der Beschichtungsmittelvorrichtung um 90° aus, so dass die Beschichtungsmittelvorrichtung herausgezogen werden kann. Vorteilhaft ist dabei insbesondere, dass der Verdrehsicherungsanschlag definiert ist und dass eine optische Kontrolle der Ventillage durch das Einrasten der Verdrehsicherung realisiert werden kann.

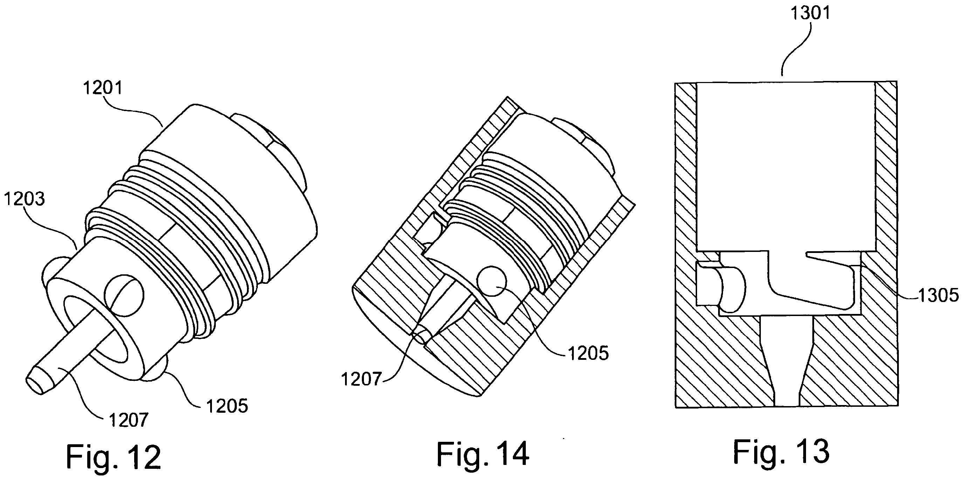

Fig. 12 zeigt eine Beschichtungsmittelvorrichtung, beispielsweise ein Beschichtungsmittelventil mit einem Gehäuse 1201 und einem steckbaren Befestigungssockel 1203, dessen Wandung mit beispielsweise drei Kugelbolzen 1205, welche genormt sein können, quer in einer Querschnittsebene versehen ist. Die Kugelbolzen 1205 können in dem Befestigungssockel 1203 zumindest teilweise eingebettet sein, so dass deren hervorstehenden Abschnitte Halteelemente zur Verdrehsicherung formen können.

Fig. 13 zeigt ein Gehäuse einer Beschichtungsvorrichtung mit. einer Aufnahmebuchse 1301 zur Aufnahme des Befestigungssockels 1203 aus Fig. 1. Die Aufnahmebuchse 1301 ist mit einer Mehrzahl von, beispielsweise mit drei, Wendelnuten 1305 versehen, deren Steigung jeweils 10% und deren Hub 1 mm betragen kann. Die Wendelnuten 1305 sind beispielsweise eingefräst. Die Kugelbolzen 205 können ferner auch als Stifte ausgeführt sein. Ferner können sie als Zapfen direkt aus dem Ventilgehäuse herausgefräst werden. Die Wendelnuten 305 haben den Vorteil, dass sie bei einer einfachen Gehäusekontur eine hohe Spannkraft ermöglichen, welche für eine sichere Verbindung sorgt.

Fig. 14 zeigt die Beschichtungsmittelvorrichtung aus Fig. 12 im eingebauten Zustand. Hierzu wird deren Befestigungssockel 1203 in die Aufnahmebuchse 1301 eingesteckt und beispielsweise um 60° bis zum Anschlag verdreht. Die Verdrehsicherung wird dabei über eine Spannung einer Nadeldichtung im Reibschluss bewirkt. Zum Ausbau der Beschichtungsmittelvorrichtung wird diese zurückgedreht und herausgezogen.

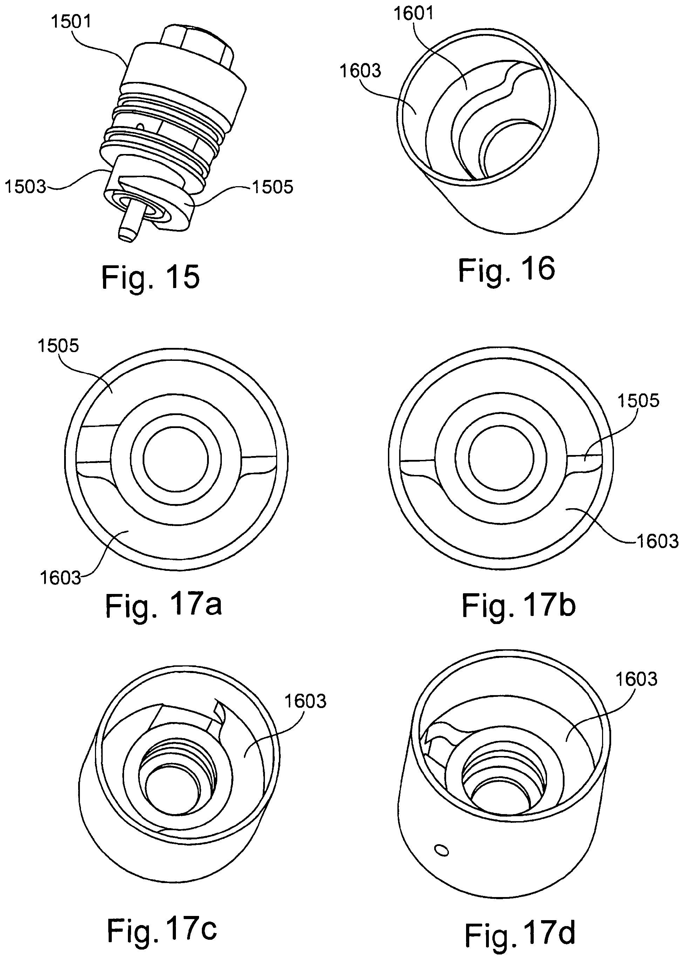

Fig. 15 zeigt eine Beschichtungsmittelvorrichtung, beispielsweise ein Ventil, mit einem Ventilgehäuse 1501 und einem steckbaren Befestigungssockel 1503, welcher mit einem Zapfensegment 1505, der mit einer Spannschräge von 1,5 mm und 20° um beispielsweise 180° angefräst sein kann.

Fig. 16 zeigt ein Gehäuse einer Beschichtungsvorrichtung mit einer Aufnahmebuchse 1601 zur Aufnahme des Befestigungssockels 1503 aus Fig. 15. Die Aufnahmebuchse 1601 ist mit einer Halteleiste 1603 versehen, welche sich beispielsweise um 160° erstreckt.

In den Figuren 17A bis 17D ist die Befestigung des in Fig. 15 dargestellten Befestigungssockels 1503 in der Aufnahmebuchse 1601 dargestellt. Fig. 17A zeigt dabei den Befestigungssockel 1503 im eingesteckten, jedoch noch nicht im verdrehten Zustand. Figuren 17B bis 17D zeigen die Befestigung im verdrehgesicherten Zustand.

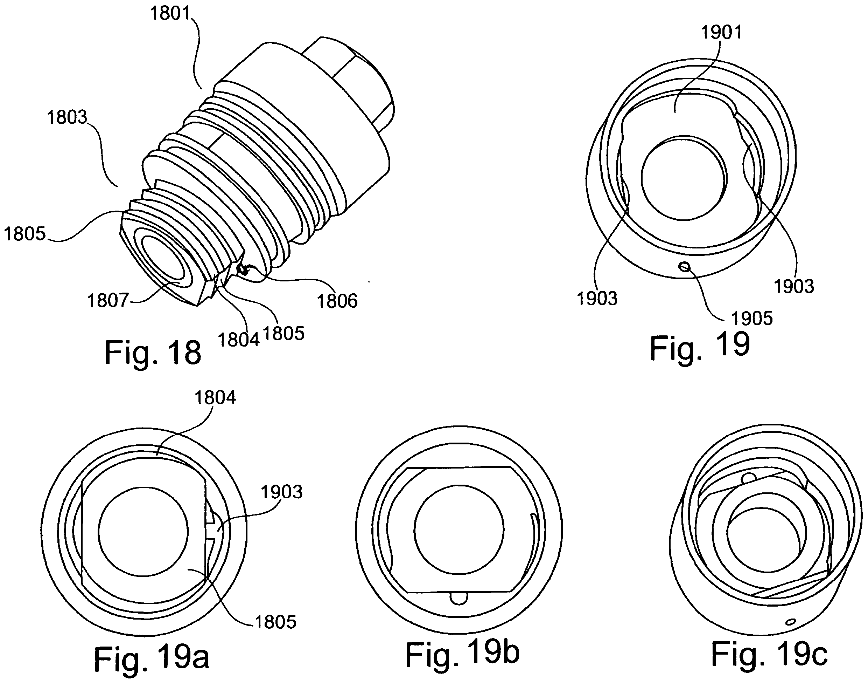

Fig. 18 zeigt eine Beschichtungsmittelvorrichtung, beispielsweise ein Ventil, mit einem Ventilgehäuse 1801 und einem steckbaren Befestigungssockel 1803, welcher teilweise mit einem Gewinde 1804, welches axial abgeflachte Abschnitte 1805 aufweist, umfasst. Die abgeflachten Abschnitte 1805 können symmetrische Abfräsungen sein, wodurch der Befestigungssockel nach dem "Schlüssel-Loch"-Prinzip in eine Aufnahmebuchse eingeführt und in dieser zur Verdrehsicherung verdreht werden kann. Der Befestigungssockel 1803 ist ferner mit einem optionalen Positionierstift 1806 zur Positionierung dessen Einführung in eine Aufnahmebuchse versehen.

Fig. 19 zeigt ein Gehäuse einer Beschichtungsvorrichtung mit einer Aufnahmebuchse 1901 zur Aufnahme des Befestigungssockels 1803. Die Aufnahmebuchse 1901 ist beispielsweise länglich ausgeführt und umfasst seitliche Gewindesegmente 1903 zur Aufnahme der Gewindeabschnitte des Befestigungssockels. Die Aufnahmebuchse ist ferner optional mit einer Leckagebohrung 1905 versehen. Die in Fig. 19 dargestellte Aufnahmebuchse 1901 hat symmetrisch angeordnete Gewindeausnehmungen zur Aufnahme des Gewindes 1804. Diese können jedoch auch asymmetrisch angeordnet sein.

Figuren 19A, 19B und 19C zeigen eine Verdrehsicherung des Befestigungssockels 1803 in der Aufnahmebuchse 1901. Fig. 19B und 19C zeigen den verdrehgesicherten Zustand.

Das Gewinde 1804 des Befestigungssockels kann ein M14x1,5 Gewinde sein, welches an zwei Seiten beispielsweise symmetrisch oder unsymmetrisch abgefräst ist. Korrespondierend hierzu ist die Aufnahmebuchse 1901 an zwei Seiten ausgespart. Der radiale Stift 1806 kann beispielsweise zur eindeutigen Positionierung dienen, wobei stirnseitig ein Dichtungsring in einer Nut 1807 zur Abdichtung der Leckage vorgesehen sein kann. Zum Einbau wird der Befestigungssockel 1803 in die Aufnahmebuchse eingesteckt und beispielsweise um ca. 90° bis 110° verdreht. Die Verdrehsicherung wird dabei über eine reibschlüssige Spannung einer Nadeldichtung realisiert. Zum Ausbau der Beschichtungsmittelvorrichtung wird diese zurückgedreht und herausgezogen.

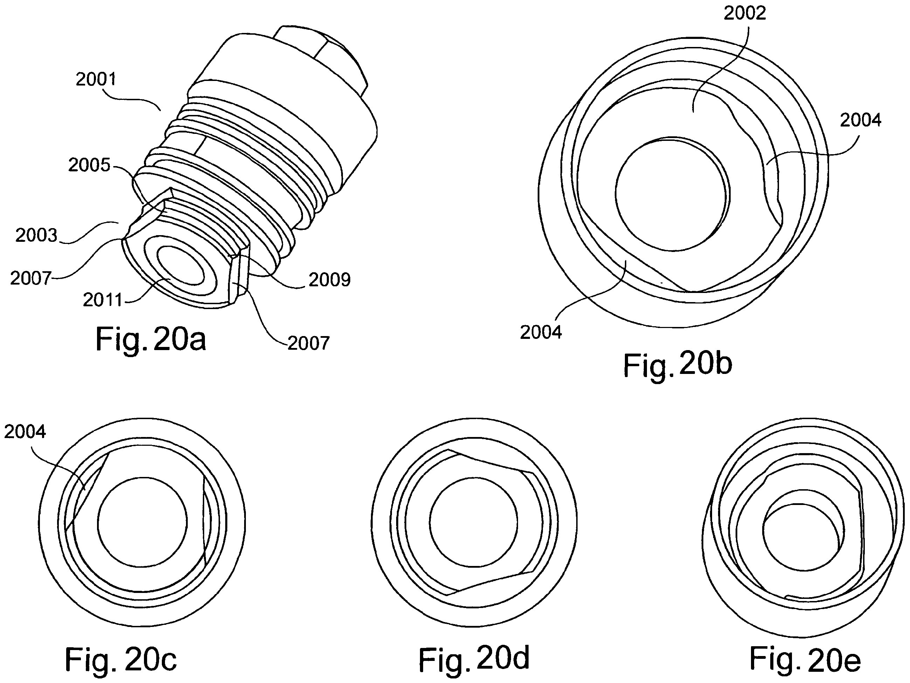

Fig. 20A zeigt eine Beschichtungsmittelvorrichtung, beispielsweise ein Ventil, mit einem Gehäuse 2001 und einem steckbaren Befestigungssockel 2003, das asymmetrisch angeordnete und sich axial ausdehnende Gewindeabschnitte 2005 aufweist, welche durch asymmetrische, axiale Abfräsungen 2007 beabstandet sind. Der Befestigungssockel 2003 umfasst ferner eine Leckagebohrung 2009 sowie eine Nut 2011 für einen Dichtungsring. Nicht dargestellt ist eine Ventilnadel, welche in einem Zylinder des Befestigungssockels 2103 angeordnet sein kann.

Fig. 20B zeigt eine Kontur eines Gehäuses einer korrespondierenden Beschichtungsvorrichtung, beispielsweise eines Zerstäubers oder eines Farbwechslers, mit einer asymmetrisch geformten Aufnahmebuchse 2002, welche asymmetrisch angeordnete Gewindesegmente 2004 aufweist.

In den Figuren 20C bis 20E ist die Beschichtungsmittelvorrichtung aus Fig. 20A im eingebauten Zustand dargestellt. Dabei zeigt die Fig. 20C einen eingesteckten Zustand, wobei die Figuren 20D bis 20E die Verdrehsicherung verdeutlichen.

Das Gewinde 2005 kann beispielsweise an zwei Seiten asymmetrisch um 30° abgefräst sein, wobei, korrespondierend hierzu, in der Aufnahmebuchse 2002 das gleiche Gewinde eingebracht und danach an zwei Seiten ausgespart werden kann. Die eindeutige Positionierung des Befestigungssockels 2003 in der Aufnahmebuchse 2002 kann über die asymmetrischen Flächen nach dem "Schlüssel-Loch"-Prinzip realisiert werden. Die Verdrehsicherung wird dabei über eine reibschlüssige Spannung einer Nadeldichtung realisiert. Zum Einbau der Beschichtungsmittelvorrichtung wird diese beispielsweise um ca. 75° verdreht und dadurch verdrehgesichert. Zum Ausbauen der Beschichtungsmittelvorrichtung wird diese zurückgedreht und herausgezogen. Vorteilhaft dabei ist insbesondere, dass die Positionierung optisch über eine Keilform sichtbar gemacht werden kann und dass kein Positionierstift notwendig ist.

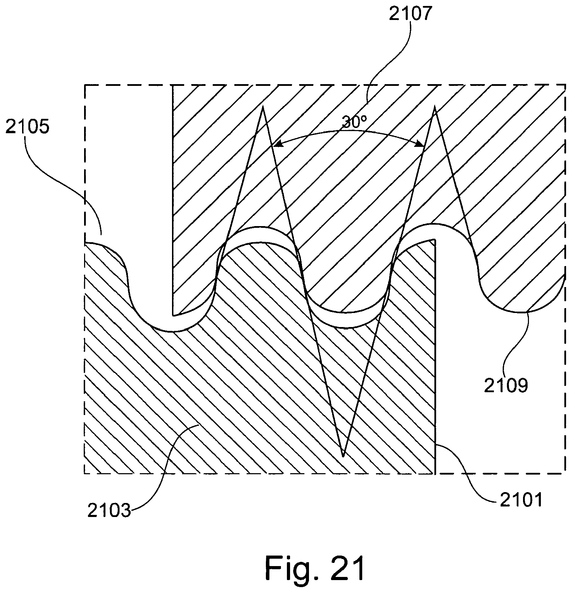

Fig. 21 zeigt einen Ausschnitt eines Befestigungssockels 2101 einer Beschichtungsmittelvorrichtung 2103. Der Befestigungssockel 2101 ist mit einem Spezialgewinde 2105 versehen, dessen Steigung 1,5 bis 3 betragen kann. Ein Schrägungswinkel des Gewindes beträgt, wie in Fig. 21 dargestellt, beispielsweise 30°. In Fig. 21 ist ferner ein Ausschnitt einer Aufnahmebuchse 2107, welche ein Ventilgehäuse formt, dargestellt. Die Aufnahmebuchse umfasst eine Wandung, welche mit einem korrespondierenden Gewinde 2109 versehen ist. Wie in Fig. 21 ferner dargestellt, kann ein Schrägungswinkel des Gewindes 2105, 2109 beispielsweise 30° betragen. Ferner sind die Gewindegänge und/oder die Gewindeflanken abgerundet, wodurch eine erhöhte Hochspannungsfestigkeit erreicht wird. Die Gewinde 2105, 2109 können ferner einen Durchmesser von beispielsweise 10, 11, 12 oder 14 mm aufweisen. Bei den Gewinden 2105 bzw. 2109 kann es sich ferner beispielsweise um Sondergewinde handeln, beispielsweise um das M11x3 Gewinde mit abgerundetem Gewindegrund und abgerundeten Gewindespitzen. Die in den Figuren 1 bis 21 dargestellten Beschichtungsmittelvorrichtungen können beispielsweise selbsthemmend und/oder über einen Formschluss oder über einen Reibschluss verdrehgesichert werden. Ferner können die Merkmale der vorstehenden Beschichtungsmittelvorrichtungen einzeln oder gruppenweise miteinander kombiniert werden, wodurch weitere vorteilhafte Ausführungsformen realisiert werden können.

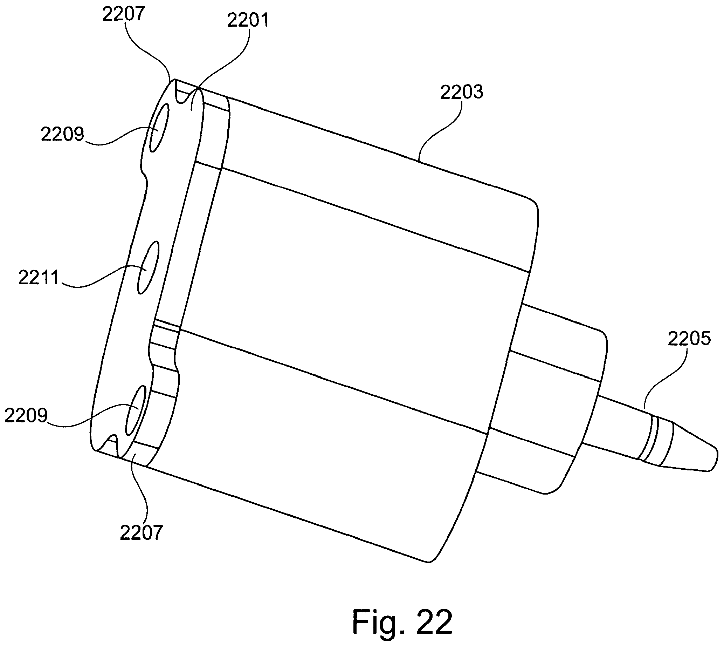

Fig. 22 zeigt eine Beschichtungsmittelvorrichtung, beispielsweise ein Beschichtungsmittelventil, mit einer Antriebsschnittstelle 2201, einem dieser nachgeordneten Gehäuse 2203 und (im Unterschied zur Erfindung) nur einer Ventilnadel 2205. Die Antriebsschnittstelle 2201 weist einen im Wesentlichen ovalen Querschnitt auf, wobei nach außen gewölbte Verbindungsbereiche 2207, welche jeweils mit einer Bohrung 2209 zur Aufnahme von Schrauben versehen sind, vorgesehen sind. Die Antriebsschnittstelle 2201 umfasst ferner einen Steuereingang 2211, über welchen Druckluft zum Antreiben der Ventilnadel 2205 der Beschichtungsmittelvorrichtung zuführbar ist.

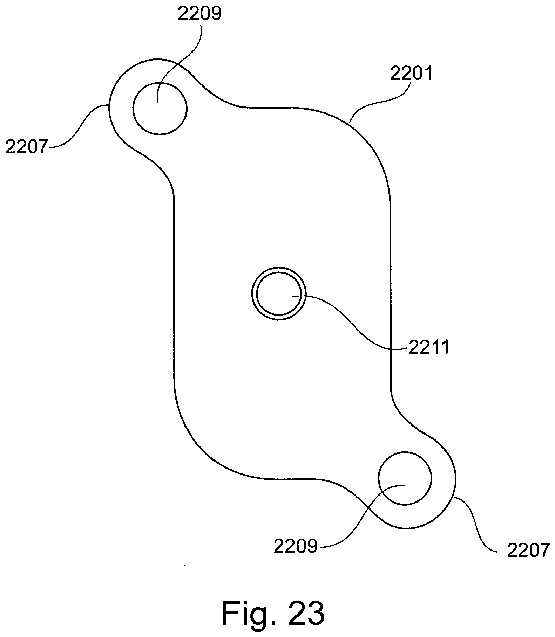

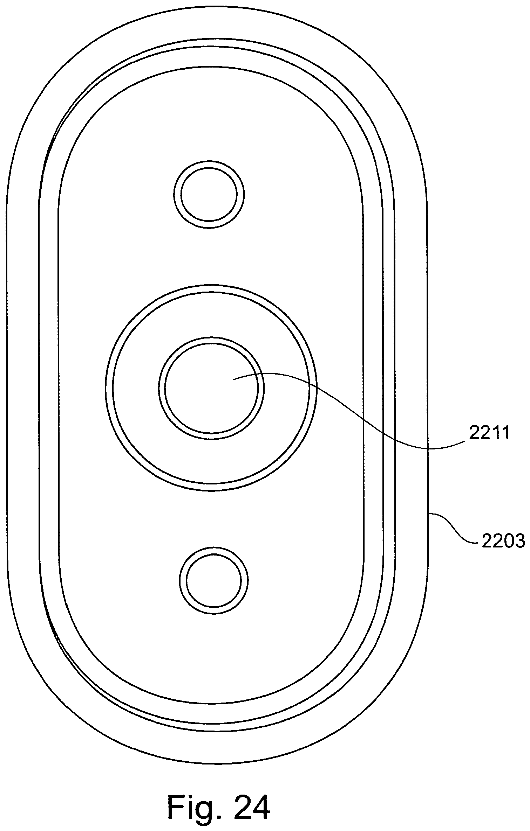

Fig. 23 zeigt eine Draufsicht auf die Antriebsschnittstelle 2201. Fig. 24 zeigt einen Querschnitt des Gehäuses 2203 der Beschichtungsmittelvorrichtung aus Fig. 22. Der Querschnitt ist im Wesentlichen oval ausgeführt und nimmt die Form des Querschnitts der Antriebsschnittstelle 2201 auf.

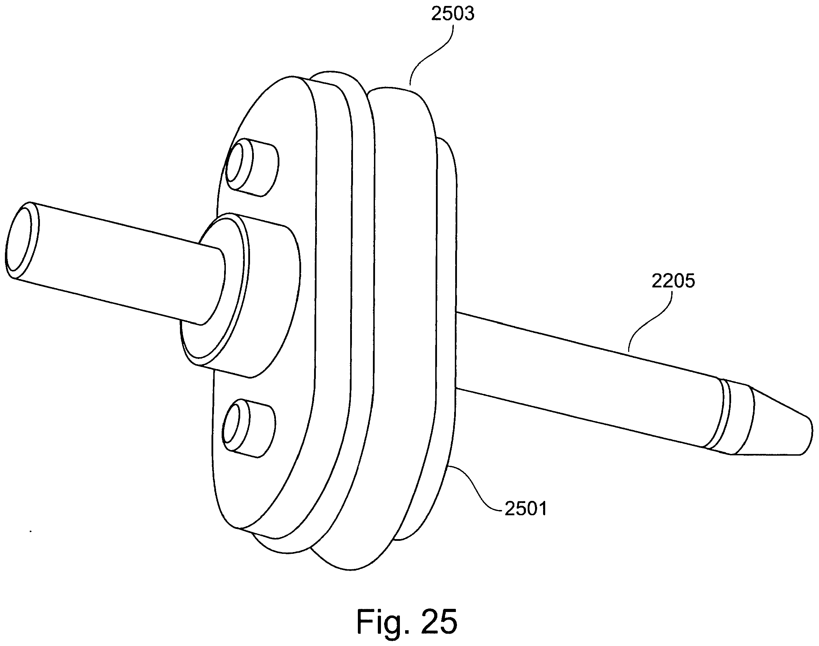

Fig. 25 zeigt die Ventilnadel 2205 aus Fig. 22, welche in dem Gehäuse 2203 angeordnet ist. Die Ventilnadel 2205 ist in einem Kolbenelement 2501 angeordnet, welches mit Druckluft beaufschlagbar ist, wodurch die Ventilnadel 2205 angetrieben werden kann. Das Kolbenelement 2501 umfasst seitlich eine umlaufende Dichtung 2503, deren Querschnitt wie der Querschnitt des Kolbenelementes 2501 oval ist und die Form des Querschnitts des Gehäuses 2203 aufnimmt. Die Ventilnadel 2205 wird zusammen mit dem Kolbenelement in einem Zylinder des Gehäuses 2203 angeordnet.

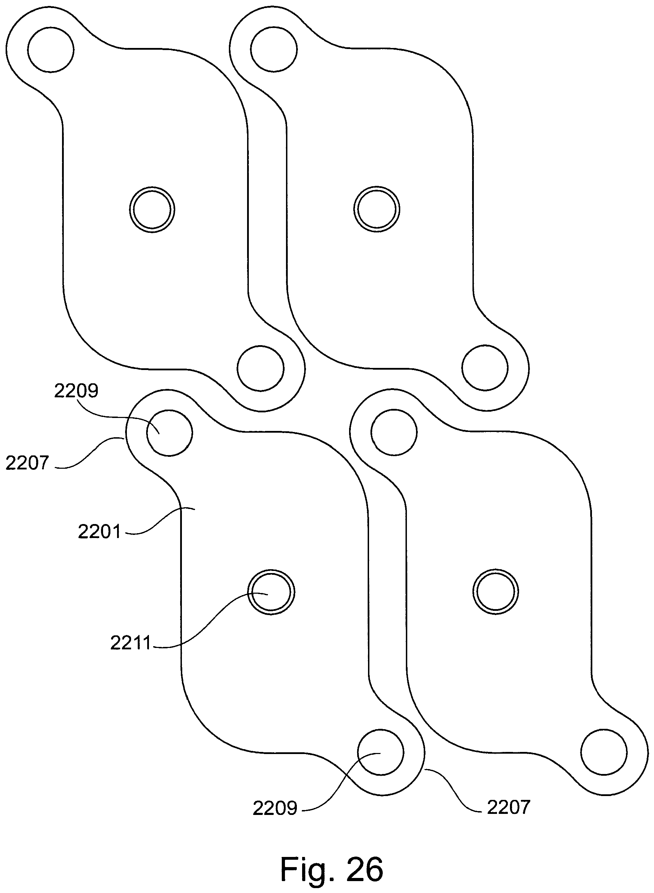

Fig. 26 zeigt eine Draufsicht auf eine Anordnung einer Mehrzahl von Beschichtungsmittelvorrichtungen, wie sie in Fig. 22 dargestellt sind. Wie in Fig. 26 dargestellt erlaubt die längliche Ausführung der Ventilschnittstelle 2201 die, wie in Fig. 26 angedeutet, zumindest teilweise formschlüssig sein kann, eine dichte Anordnung der Beschichtungsmittelvorrichtungen nebeneinander. Dadurch wird die Packungsdichte der Beschichtungsmittelvorrichtungen in einer Beschichtungsvorrichtung der vorgenannten Art erhöht.

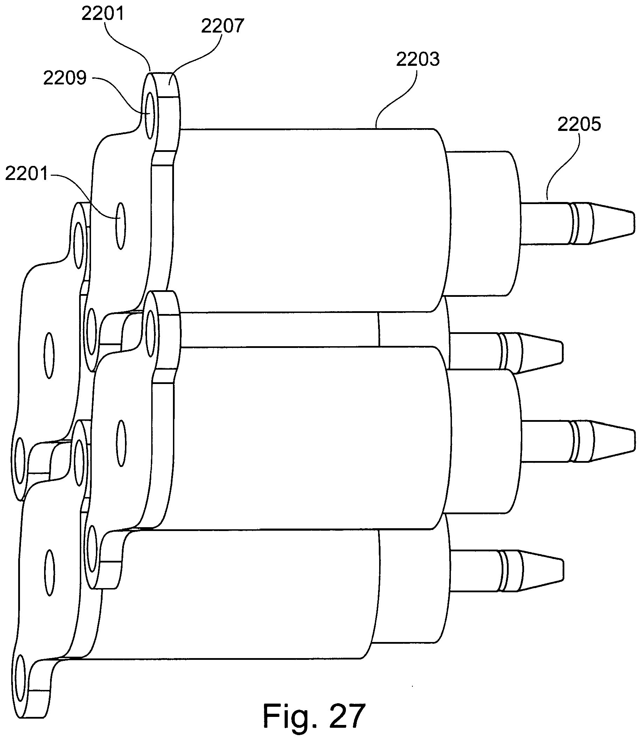

Fig. 27 zeigt eine seitliche Draufsicht auf die in Fig. 26 dargestellte Anordnung der Beschichtungsmittelelemente aus Fig. 22. Wie in Fig. 27 dargestellt, können die Beschichtungsmittelvorrichtungen, welche beispielsweise Ventile sein können, aufgrund der länglichen Form der Querschnitte der Antriebsschnittstelle 2201 und des Gehäuses 2203 vorteilhaft dicht nebeneinander angeordnet werden.

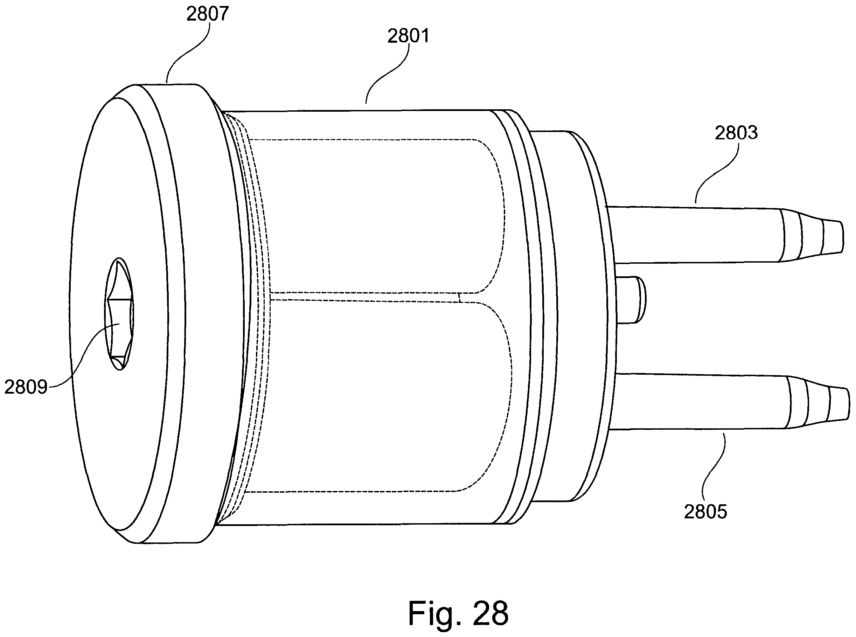

Durch die ovale Ausführung des Ventilantriebs kann dieser eine kompakte Bauform aufweisen, wobei eine Anzahl der nebeneinander anordenbaren Ventile, die auf einem Kanal münden können, erhöht werden kann. Darüber hinaus ist gegenüber einem runden Kolben durch die Verwendung des ovalen Kolbens bzw. Kolbenabschnitts eine erhöhte Schaltkraft zu erwarten. Fig. 28 zeigt eine Beschichtungsmittelvorrichtung, beispielsweise ein Beschichtungsmittelventil, mit einem Gehäuse 2801 und einer Mehrzahl von Ventilnadeln 2803 und 2805. Die Beschichtungsmittelvorrichtung umfasst eine Antriebsschnittstelle 2807, welche einen oder mehrere Steuereingänge 2809 zum Antreiben der Ventilnadeln 2803 aufweisen kann. Diese sind bevorzugt parallel nach außen ausgeführt und getrennt voneinander betreibbar, so dass die Ventilnadel 2803 beispielsweise für das Kurzspülen mit Luft und die Ventilnadel 2805 für das Kurzspülen mit einem Lösungsmittel eingesetzt werden können. Darüber hinaus können die Ventilnadel 2803 zur Ausgabe des Beschichtungsmittels und die Ventilnadel 2805 zur Rückführung desselben vorgesehen sein. Die Antriebsschnittstelle 2807 kann beispielsweise wie in Fig. 26 dargestellt oval oder kreisrund oder eckig ausgeführt sein. Figur 28 würde eine Beschichtungsmittelventil mit einer erfindungsgemäß ausgebildeten Antriebsschnittstelle zeigen, wenn Antriebsschittstelle 2807 mit einem länglichen Querschnitt dargestellt wäre.

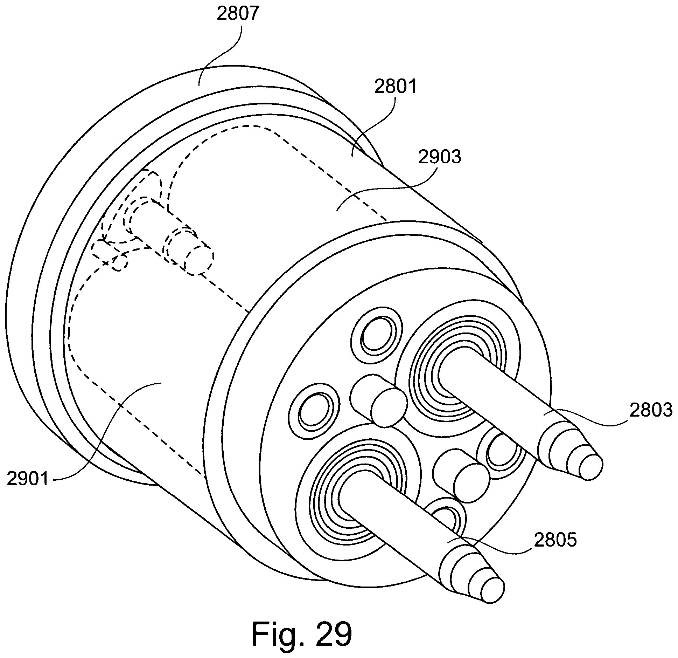

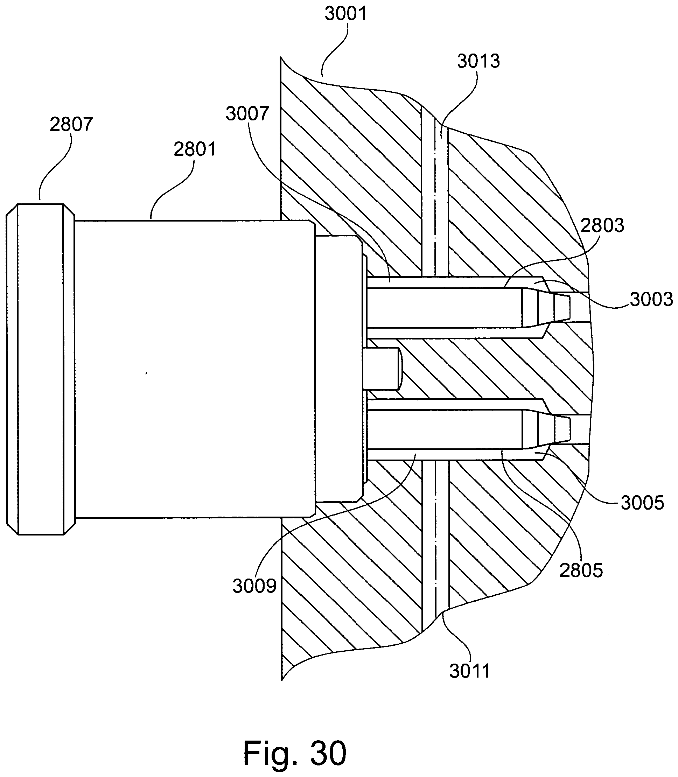

Fig. 29 zeigt eine Vorderansicht der Beschichtungsmittelvorrichtung aus Fig. 28. Wie in Fig. 29 dargestellt, ist jede Ventilnadel 2803, 2805 in einem jeweils der jeweiligen Nadel zugeordneten Zylinder bzw. Kanal 2901 bzw. 2903 geführt. Fig. 30 zeigt die Beschichtungsmittelvorrichtung aus Fig. 28, welche mit einer Beschichtungsvorrichtung 3001, beispielsweise einem Zerstäuber oder einem Farbwechsler, verbunden ist. Die Beschichtungsvorrichtung 3001 umfasst zwei Ventilsitze 3003 und 3005, welche jeweils für die jeweilige Ventilnadel 2803 bzw. 2805 vorgesehen sind. Jede Nadel 2803 bzw. 2805 ist in einem ihr zugeordneten Zylinder bzw. Kanal 3007 bzw. 3009 bewegbar, wobei senkrecht hierzu Hilfskanäle 3011 und 3013 vorgesehen sind. Die Hilfskanäle 3011 und 3013 können beispielsweise zum Spülen der Ventilnadeln 2803 bzw. 2805 oder zum Rückführen des jeweiligen Beschichtungsmittels vorgesehen sein. Die Beschichtungsmittel werden dabei, die jeweilige Nadel 2803 bzw. 2805 umhüllend, über die Kanäle 3007 und 3009 geführt.

Bei dem vorstehend beschriebenen Doppelventil können zumindest zwei unabhängige Funktionen realisiert werden, welche auf einem kleineren Bauraum möglich sind. Derartige Doppelventile können beispielsweise als Funktionsventile, Farbwechsler oder Zerstäuber in allen möglichen Kombinationsvarianten mit beispielsweise verschieden langen Nadeln, als Einzelventilblock mit zwei Funktionen oder als ein Mehrfachventilblock mit Mehrfachfunktionen realisiert werden. Derartige Ventile können einseitig oder gegenüberliegend oder in einem Kreis angeordnet werden, wobei die Ansteuerung direkt über einen Schlauchanschluss oder indirekt über eine Zuleitungsbohrung realisiert werden kann. Die Ventile können ferner in Analogie zu Pneumatikventilen aneinandergereiht werden.

Das Gehäuse 2801 sowie die Antriebsschnittstelle 2807 können kreisrund oder oval ausgebildet sein. Darüber hinaus können die Ventilnadeln 2805 und 2803 mit ovalen Kolbenelementen 2501 versehen sein, welche jeweils mit Dichtungen 2503 abgedichtet sind.

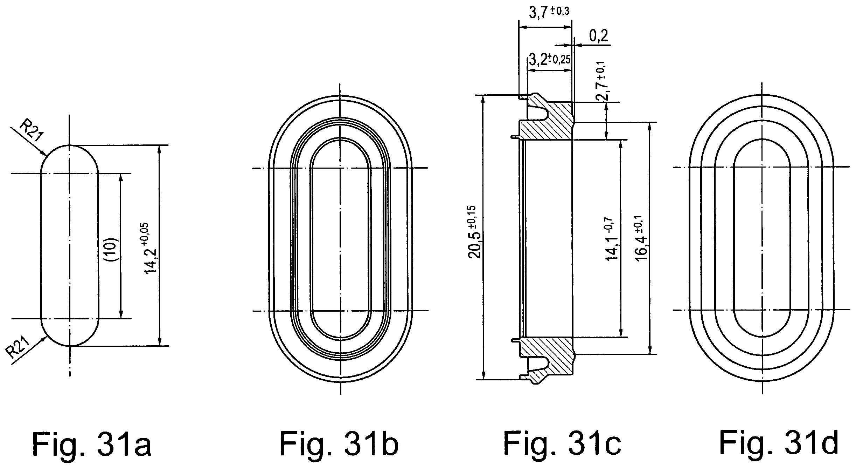

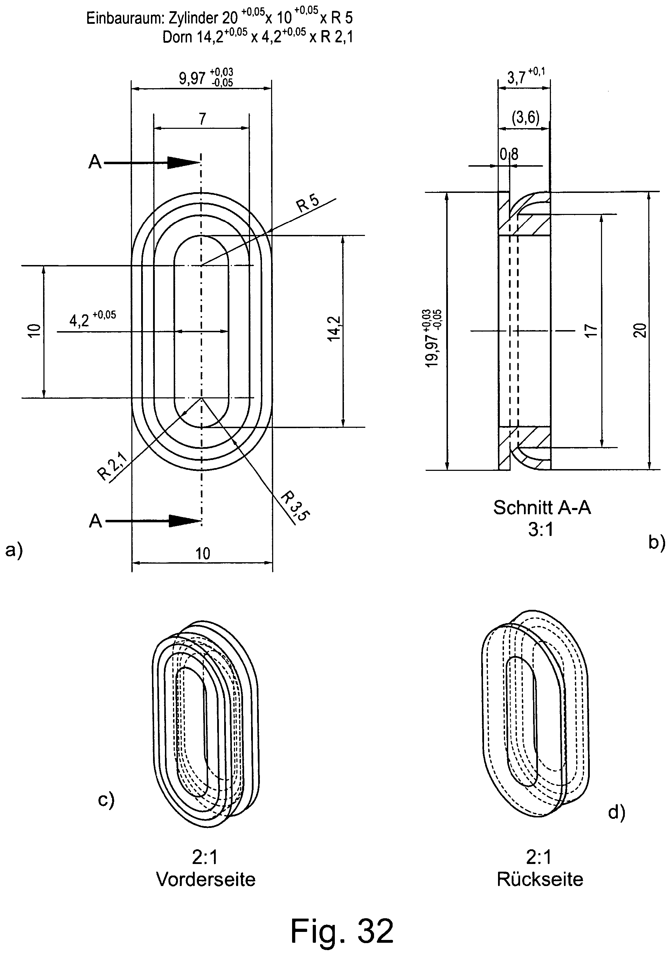

Figuren 31A bis 31D zeigen Ansichten eines ovalen Kolbenelementes der vorgenannten Art. Figuren 32A bis 32C zeigen Ansichten von ovalen Dichtungen, welche beispielsweise mit dem ovalen Kolbenelement zusammenwirken können.

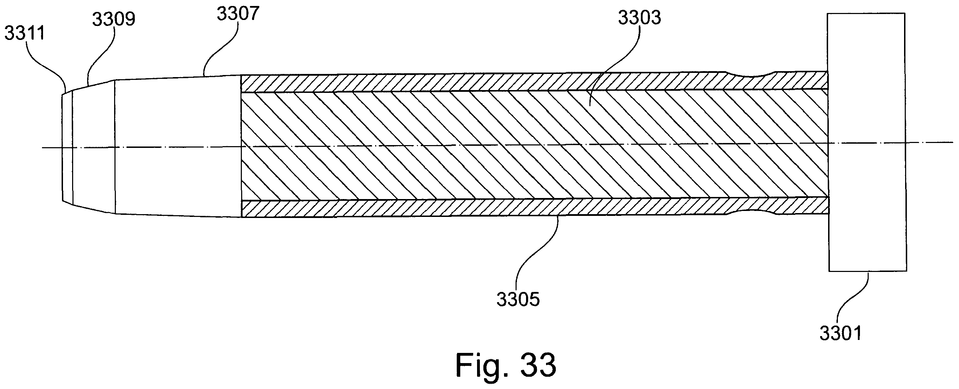

Fig. 33 zeigt eine Ventilnadel mit einem Ventilnadelkopf 3301 und einem Ventilnadelschaft 3303, welcher aus Kunststoff bestehen kann. Der Ventilnadelschaft 3303 ist mit einer Hülse 3305 ummantelt, welche aus einem Verbundwerkstoff oder aus einem Keramikwerkstoff geformt sein kann, so dass die Hülse 3305 abriebfester als der Ventilnadelschaft 3303 ist. Die Hülse 3305 kann ferner aus Metall oder aus DLC (diamond-like carbon) geformt sein.

Ein dem Ventilnadelkopf 3301 abgewandtes Ende der Ventilnadel kann beispielsweise mehrfach abgeflacht sein und beispielsweise einen Spülabschnitt 3307, einen Dichtabschnitt 3309 und einen Führungsabschnitt 3311 aufweisen. Der Spülabschnitt 3307 dient dazu, eine Spülung der Ventilnadel, beispielsweise einer Kurzspülung derselben, zu verbessern. Der Spülabschnitt 3307 verjüngt sich beispielsweise unter einem Schrägungswinkel von 10° oder, bezüglich einer Längsachse der Ventilnadel, unter einen Winkel von 5°. Dem Spülabschnitt 3307 ist strömungsabwärts unmittelbar ein Dichtabschnitt 3309 nachgeordnet, welcher bei Betrieb der Ventilnadel mit einem Ventilsitz zusammenwirkt und für Abdichtung sorgt. Der Dichtabschnitt verjüngt sich beispielsweise unter einem Schrägungswinkel von 30% bzw., bezüglich der Längsachse der Ventilnadel, unter einem Winkel von 15%. Dem Dichtabschnitt 3309 ist strömungsabwärts der Führungsabschnitt 3311 nachgeordnet, welcher zum Einführen der Ventilnadelspitze in den Ventilsitz dient. Der Führungsabschnitt 3311 ist bevorzugt kürzer als die übrigen beiden Abschnitte 3307 und 3309 ausgeführt und verjüngt sich unter einem Schrägungswinkel von 120° bzw., bezüglich der vorgenannten Längsachse, unter einem Winkel von 60°. Dabei sind sowohl die Hülse 3305 als auch die Abschnitte 3307 bis 3311 jeweils optional.

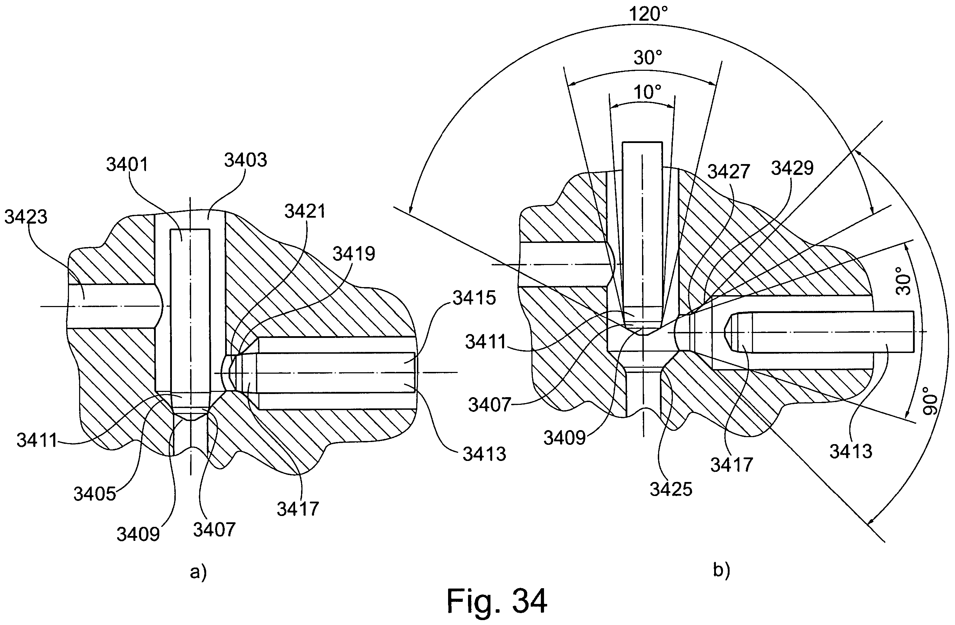

Fig. 34A zeigt eine erste Ventilnadel 3401 einer Beschichtungsmittelvorrichtung, welche in einem Zylinder bzw. Kanal 3403 einer Beschichtungsvorrichtung angeordnet ist. Der Zylinder 3403 umfasst einen Ventilsitz 3405, welcher mittels eines Dichtabschnittes 3407 der Ventilnadel 3401 abgedichtet ist. Der Dichtabschnitt 3407 entspricht beispielsweise dem Dichtabschnitt 3307. Die Ventilnadel 3401 umfasst ferner einen Führungsabschnitt 3409, welcher dem Führungsabschnitt 3311 entsprechen kann, und einen Spülabschnitt 3411, welcher dem Spülabschnitt 3307 entsprechen kann. Wie in Fig. 34A dargestellt, wird durch die Verjüngung des Spülabschnitts 3411 ein Spülzwischenraum vergrößert.

Die Beschichtungsmittelvorrichtung kann ferner eine zweite Nadel 3413 aufweisen, welche senkrecht zu der Ventilnadel 3401 in einem Kanal 3415 angeordnet ist. Die zweite Ventilnadel kann ebenfalls einen Spülabschnitt 3417, einen Dichtabschnitt 3419 und einen Führungsabschnitt 3421 aufweisen, wobei die Abschnitte 3417, 3419 und 3421 die Merkmale der Abschnitte 3307, 3309 und 3311 aufweisen können. Die zweite Ventilnadel 3413 kann beispielsweise zum Spülen der ersten Ventilnadel 3401 betätigt werden. Ferner umfasst die Beschichtungsmittelvorrichtung einen Hilfskanal 3423, welcher in dem Beschichtungsmittelkanal 3403 mündet.

Fig. 34B verdeutlicht die Schrägungswinkel des Führungsabschnitts 3409, des Dichtabschnitts 3407 sowie des Spülabschnitts 3411 der ersten Ventilnadel 3401 im aus dem Ventilsitz verdrängten Zustand. Wie in Fig. 34B dargestellt, umfasst der Ventilsitz einen zu dem Dichtabschnitt 3407 korrespondierenden Dichtabschnitt 3425.

In Fig. 34B ist ferner die zweite Ventilnadel 3413 im aus dem Ventilsitz verdrängten Zustand dargestellt. Der Ventilsitz kann beispielsweise einen Dichtabschnitt 3427 aufweisen, welcher beispielsweise unter einem Schrägungswinkel von 90° abgeschrägt ist. Dieser Ventilsitz kann ferner einen weiteren verjüngten Abschnitt 3429 aufweisen, welcher sich unter einem Winkel von beispielsweise 90° verjüngt und vorgesehen ist, einen Zwischenraum zwischen dem Ventilsitz und dem Spülabschnitt 3417 der zweiten Ventilnadel 3413 zu vergrößern.

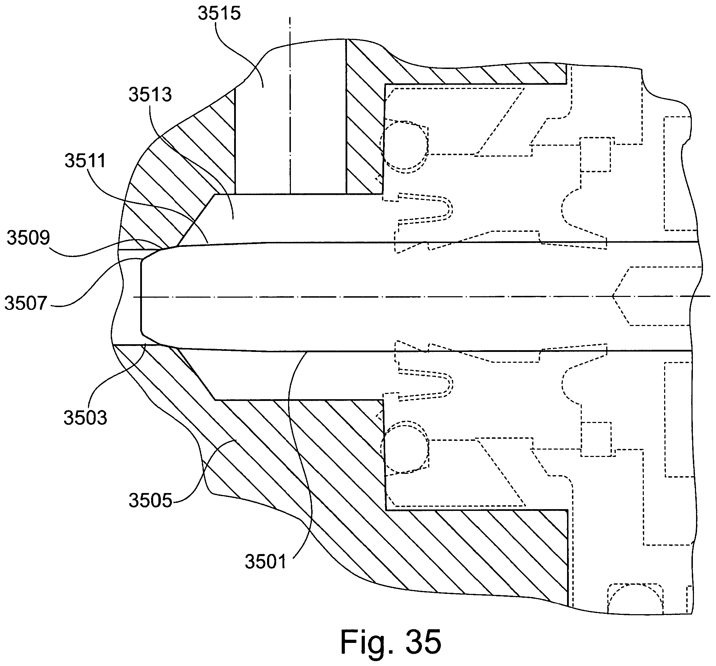

Fig. 35 zeigt ein mehrfach abgeschrägtes Beschichtungsmittelventil 3501, welches in einem geschlossenen Zustand in einem Ventilsitz 3503 einer Beschichtungsmittelvorrichtung 3505, beispielsweise eines Zerstäubers oder eines Farbwechslers, sitzt. Die Ventilnadel 3501 umfasst einen Führungsabschnitt 3507, einen Dichtabschnitt 3509 und einen Spülabschnitt 3511, welche die Merkmale der in Fig. 33 dargestellten Abschnitte aufweisen können. Wie in Fig. 35 dargestellt, wirkt bevorzugt nur der Dichtabschnitt 3509 abdichtend mit dem Ventilsitz 3503 zusammen, wobei sowohl der Führungsabschnitt 3507 als auch der Spülabschnitt 3511 nicht mit diesem in Berührung steht. Die Ventilnadel 3501 ist in einem Zylinder bzw. Kanal 3513 angeordnet, wobei durch das Vorsehen des abgeschrägten Spülabschnitts 3511 ein größerer Zwischenraum zum Spülen der Nadel 3501 bereitgestellt wird. Hierzu kann die Beschichtungsmittelvorrichtung 3505 einen Hilfskanal 3515 aufweisen.

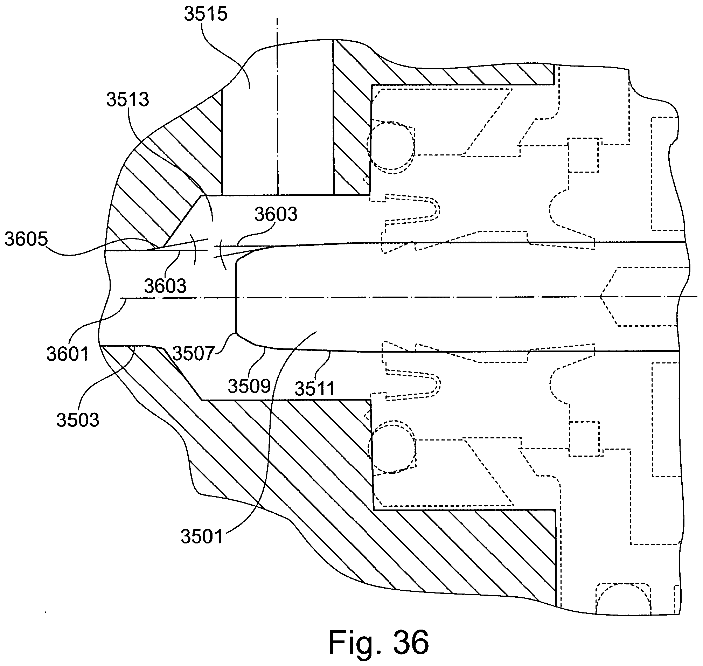

Fig. 36 zeigt die Ventilnadel aus Fig. 35 im geöffneten Zustand. Dabei kann der Dichtabschnitt 3509 sich bezüglich der Längsachse 3601 unter einem Dichtwinkel 3603 verjüngen, welcher beispielsweise 15° sein kann. Bevorzugt umfasst der Ventilsitz 3503 einen Dichtabschnitt 3605, welcher sich ebenfalls unter demselben Dichtwinkel 3603 verjüngt.

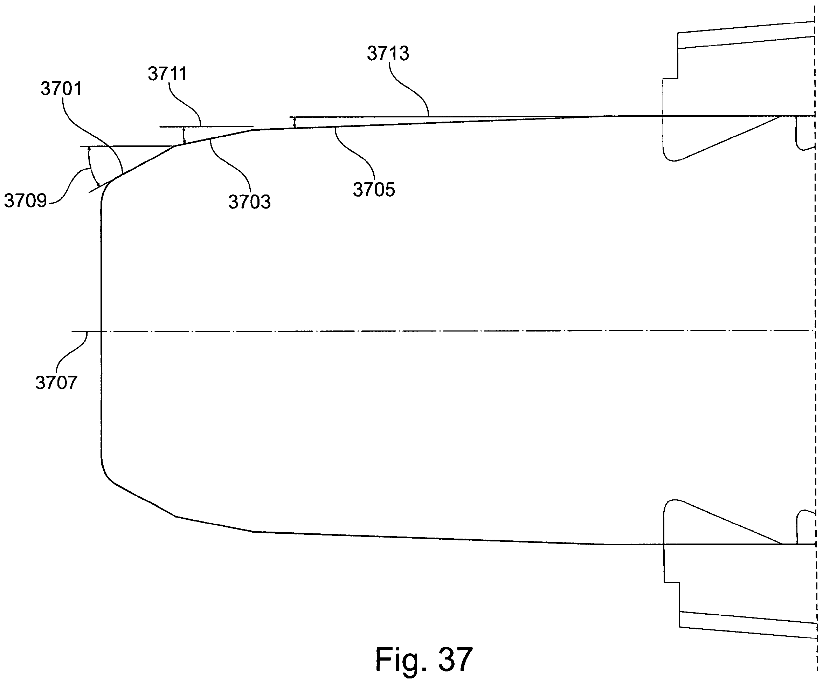

Fig. 37 zeigt eine Ventilnadelspitze mit einem Führungsabschnitt 3701, einem Dichtabschnitt 3703 und einem Spülabschnitt 3705. Der Führungsabschnitt 3701 verjüngt sich bezüglich einer Längsachse 3707 um einen Führungswinkel 3709, welcher 60° betragen kann. Der Dichtabschnitt 3703 verjüngt sich bezüglich der Längsachse 3707 um einen Dichtwinkel 3711, welcher 15° betragen kann. Der Spülabschnitt 3705 verjüngt sich bezüglich der Längsachse 3707 um einen Spülwinkel 3713, welcher 5° betragen kann

Die Ventilnadelspitze kann beispielsweise aus Kunststoff geformt sein und mit einem harten Ventilsitz, welcher beispielsweise aus Edelstahl geformt ist, zusammenwirken. Die Abdichtung im Ventilsitz kann beispielsweise ohne Einschleifen bewerkstelligt werden, wobei eine prozesstechnisch sichere Abdichtung insbesondere bei einem Nadelsitz in einen Übergang zwischen einem weichen Material und einem harten Material realisiert werden kann. Die Fügefläche wird erfindungsgemäß wesentlich vergrößert, wodurch eine Bruchgefahr reduziert werden kann. Schließlich kann eine verschleißfeste Oberfläche der Ventilnadel im Bereich der Abdichtung der Nadel zum Ventilantrieb hin realisiert werden.

Der Ventilsitz im Gehäuse der entsprechenden Beschichtungsmittelvorrichtung ist im Unterschied zu der dreifach abgewinkelten Spitze der Ventilnadel beispielsweise über zwei Winkelstufen ausgeführt. Die Dichtbereiche weisen dabei beidseitig bevorzugt die gleichen Winkel auf.

Die vorstehend beschriebenen Beschichtungsmittelvorrichtungen können Ventile sein, welche als Nadel- und/oder als Sitzventile, als Funktionsventile, Farbwechslerventile, Zerstäuberventile oder Hauptnadelventile in der Lackiertechnik eingesetzt werden können. Diese Beschichtungsvorrichtungen können beliebige in der Lackiertechnik eingesetzte Vorrichtungen sein, nämlich Zerstäuber oder Farbwechsler, welche mit derartigen Beschichtungsmittelvorrichtungen zusammenwirken können.

## Patentansprüche

1. Zerstäuber oder Farbwechsler mit einem Beschichtungsmittelventil zur Beeinflussung einer Ausgabe eines Beschichtungsmittels, wobei das Beschichtungsmittelventil eine Mehrzahl von nach außen geführten Ventilnadeln (2803, 2805) umfasst, wobei zumindest zwei Ventilnadeln (2803, 2805) der Mehrzahl von Ventilnadeln unabhängig voneinander betreibbar sind, wobei das Beschichtungsmittelventil mit dem Zerstäuber oder dem Farbwechsler gekoppelt ist und die Ventilnadeln (2803, 2805) Ventilsitze (3003, 3005) des Zerstäubers oder des Farbwechslers abdichten, **dadurch gekennzeichnet, dass**
- das Beschichtungsmittelventil eine Antriebsschnittstelle zum Ankoppeln einer Antriebsvorrichtung aufweist, wobei die Antriebsschnittstelle einen länglichen Querschnitt aufweist, wobei vorzugweise der Querschnitt zumindest abschnittsweise oval ist.

2. Zerstäuber oder Farbwechsler gemäß Anspruch 1, **dadurch gekennzeichnet, dass** zumindest zwei Ventilnadeln (2803, 2805) eine unterschiedliche geometrische Form, insbesondere eine unterschiedliche Länge und/oder Dicke, aufweisen.

3. Zerstäuber oder Farbwechsler gemäß einem der Ansprüche 1 bis 2, **dadurch gekennzeichnet, dass** ein oder mehrere Steuereingänge (2809) zur getrennten Ansteuerung von unterschiedlichen Ventilnadeln (2803, 2805) mittels Luftdruck vorgesehen sind.

4. Zerstäuber oder Farbwechsler gemäß einem der Ansprüche 1 bis 3, **dadurch gekennzeichnet, dass** die Ventilnadeln (2803, 2805) parallel angeordnet sind.

5. Zerstäuber oder Farbwechsler gemäß einem der Ansprüche 1 bis 4, **dadurch gekennzeichnet, dass** die Antriebsvorrichtung ein Ventilantrieb ist.

6. Zerstäuber oder Farbwechsler gemäß einem der Ansprüche 1 bis 5, **dadurch gekennzeichnet, dass** der Querschnitt zumindest abschnittsweise geformt ist, eine Mehrzahl von gleichartigen Beschichtungsmittelventilen zumindest teilweise formschlüssig nebeneinander anzuordnen.

7. Zerstäuber oder Farbwechsler gemäß einem der Ansprüche 1 bis 6, **dadurch gekennzeichnet, dass** die Antriebsschnittstelle (2201) zumindest zwei konvexe Befestigungsbereiche (2207), insbesondere diagonal gespiegelt angeordnete konvexe Befestigungsbereiche, zur mechanischen Halterung des Beschichtungsmittelventils aufweist.

8. Zerstäuber oder Farbwechsler gemäß einem der Ansprüche 1 bis 7, **dadurch gekennzeichnet, dass** die Antriebsschnittstelle (2201) zumindest einen Steuereingang (2211) zur Aufnahme eines Antriebssignals der Antriebsvorrichtung, insbesondere eines Luftdrucksignals zum Antreiben einer Ventilnadel des Beschichtungsmittelventils, aufweist.

9. Zerstäuber oder Farbwechsler gemäß einem der Ansprüche 1 bis 8, **dadurch gekennzeichnet, dass** ein Querschnitt eines der Antriebsschnittstelle (2201) nachgeordneten Gehäuses der Beschichtungsmittelvorrichtung den Querschnitt der Antriebsschnittstelle (2201) zumindest teilweise aufnimmt.

## Claims

1. An atomizer or color changer having a coating agent valve for influencing a discharge of a coating agent, wherein the coating agent valve comprises a plurality of outwardly guided valve needles (2803, 2805), wherein at least two valve needles (2803, 2805) of the plurality of valve needles can be operated independently of each other, wherein the coating agent valve is coupled to the atomizer or the color changer and the valve needles (2803, 2805) seal valve seats (3003, 3005) of the atomizer or the color changer, **characterized in that**
- the coating agent valve has a drive interface for coupling a drive device, wherein the drive interface has an elongate cross-section, wherein preferably the cross-section is at least partially oval.

2. Atomizer or color changer according to claim 1, **characterized in that** at least two valve needles (2803, 2805) have a different geometric shape, in particular a different length and/or thickness.

3. Atomizer or color changer according to any one of claims 1 to 2, **characterized in that** one or a plurality of control inputs (2809) are provided for the separate actuation of different valve needles (2803, 2805) by means of air pressure.

4. Atomizer or color changer according to any of claims 1 to 3, **characterized in that** the valve needles (2803, 2805) are arranged in parallel.

5. Atomizer or color changer according to any one of claims 1 to 4, **characterized in that** the drive device is a valve drive.

6. Atomizer or color changer according to any one of claims 1 to 5, **characterized in that** the cross-section is at least partially formed to arrange a plurality of coating agent valves of the same type next to each other in an at least partially form-fitting manner.

7. Atomizer or color changer according to any one of claims 1 to 6, **characterized in that** the drive interface (2201) has at least two convex fastening regions (2207), in particular convex fastening regions arranged in a diagonally mirrored manner, for mechanically holding the coating agent valve.

8. Atomizer or color changer according to any one of claims 1 to 7, **characterized in that** the drive interface (2201) has at least one control input (2211) for receiving a drive signal of the drive device, in particular an air pressure signal for driving a valve needle of the coating agent valve.

9. Atomizer or color changer according to any one of claims 1 to 8, **characterized in that** a cross section of a housing of the coating agent device arranged downstream of the drive interface (2201) at least partially takes up the cross section of the drive interface (2201).

## Revendications

1. Pulvérisateur ou changeur de couleur avec une soupape de produit de revêtement pour le contrôle de la distribution d'un produit de revêtement, dans lequel la soupape de produit de revêtement comprend une pluralité de pointeaux de soupape guidés vers l'extérieur (2803, 2805), dans lequel au moins deux pointeaux de soupape (2803, 2805) de la pluralité de pointeaux de soupape peuvent être actionnés indépendamment entre eux, dans lequel la soupape de produit de revêtement est couplée avec le pulvérisateur ou le changeur de couleur et les pointeaux de soupape (2803, 2805) étanchéifient des sièges de soupape (3003, 3005) du pulvérisateur ou du changeur de couleur, **caractérisé en ce que**
- la soupape de produit de revêtement comprend une interface d'entraînement pour le couplage d'un dispositif d'entraînement, dans lequel l'interface d'entraînement présente une section transversale allongée, dans lequel, de préférence la section transversale est ovale au moins à certains endroits.

2. Pulvérisateur ou changeur de couleur selon la revendication 1, **caractérisé en ce qu'**au moins deux pointeaux de soupape (2803, 2805) présentent des formes géométriques différentes, plus particulièrement des longueurs et/ou épaisseurs différentes.

3. Pulvérisateur ou changeur de couleur selon l'une des revendications 1 à 2, **caractérisé en ce qu'**une ou plusieurs entrées de commande (2809) sont prévues pour le contrôle séparé de différents pointeaux de soupape (2803, 2805) au moyen d'air comprimé.

4. Pulvérisateur ou changeur de couleur selon l'une des revendications 1 à 3, **caractérisé en ce que** les pointeaux de soupape (2803, 2805) sont disposés parallèlement.

5. Pulvérisateur ou changeur de couleur selon l'une des revendications 1 à 4, **caractérisé en ce que** le dispositif d'entraînement est un entraînement de soupape.

6. Pulvérisateur ou changeur de couleur selon l'une des revendications 1 à 5, **caractérisé en ce que** la section transversale est formée, au moins à certains endroits, afin de pouvoir juxtaposer, au moins partiellement avec une complémentarité de forme, des soupapes de produit de revêtement de même type.

7. Pulvérisateur ou changeur de couleur selon l'une des revendications 1 à 6, **caractérisé en ce que** l'interface d'entraînement (2201) comprend au moins deux parties de fixation convexes (2207), plus particulièrement des parties de fixation convexes disposées diagonalement en miroir, pour le support mécanique de la soupape de produit de revêtement.

8. Pulvérisateur ou changeur de couleur selon l'une des revendications 1 à 7, **caractérisé en ce que** l'interface d'entraînement (2201) comprend au moins une entrée de commande (2211) pour la réception d'un signal d'entraînement du dispositif d'entraînement, plus particulièrement d'un signal d'air comprimé pour l'entraînement d'un pointeau de soupape de la soupape de produit de revêtement.

9. Pulvérisateur ou changeur de couleur selon l'une des revendications 1 à 8, **caractérisé en ce qu'**une section transversale d'un boîtier du dispositif de produit de revêtement, disposé en aval d'une interface d'entraînement (2201), loge au moins partiellement la section transversale de l'interface d'entraînement (2201).
